# EUROPÄISCHE PATENTANMELDUNG

(11) **EP 1 881 703 A1**
(43) Veröffentlichungstag der Anmeldung: **23.01.2008**
(21) Anmeldenummer: 06015089.3
(22) Anmeldetag: 19.07.2006
(51) Int. Cl.: H04N 7/10, H04N 5/64

(54) **Steckdose für Telekommunikationsnetze**

(71) Anmelder: TELEVES, S.A., 15706 Santiago de Compostela (ES)
(72) Erfinder: Santos, Julio Barrientos, 36003 Pontevedra (ES); Garcia, Modesto Gomez, 15707 Santiago de Compostela (ES); Carnero, Jose Luis Fernandez, 15895 Calo - Teo (ES)
(74) Vertreter: Dosterschill, Peter

(57) **Zusammenfassung**

Die Erfindung betrifft eine Steckdose (1) für Telekommunikationsnetze, insbesondere für Gemeinschafts-Antennenanlagen, bestehend aus einem Gehäuse (2), in dem mindestens ein Verbindungselement (3), eine elektronische Schaltung (4) und eine Abdeckung (5) angeordnet sind.

Erfindungsgemäß ist vorgesehen, dass die Steckdose einen Tuner (6) und Ubertragungsmittel (61) aufweist, die Telekommunikationssignale drahtlos übertragen.

## Beschreibung

Die vorliegende Erfindung betrifft eine Steckdose für Telekommunkationsnetze, insbesondere Gemeinschaftsantennenanlagen, nach dem Oberbegriff des Anspruchs 1.

Es sind MATV/SMATV-Systeme bekannt, das heißt Gemeinschafts-Antennenanlagen für den Empfang und die Verteilung von Signalen terrestischen Fernsehens und/oder satellitengestützten Fernsehens, welche mittels einer gemeinschaftlichen Anlage den Fernsehsignalempfang ermöglichen sowie die Verteilung empfangener Signale an verschiedene Komponenten, die einer Gemeinschaft von Nachbarn zugeordnet sind. Diese Systeme bestehen im Wesentlichen aus einer Kopfeinheit, die die unterschiedlichen Fernsehkanäle des terrestischen und/oder des Satellitenfernsehens empfängt, aus einer Signalbearbeitungseinheit, die die empfangenen Kanäle anpaßt und verstärkt und aus einem Verteilnetz, das die Signale bis zum Benutzer überträgt.

Der Verbindungspunkt zwischen Benutzer und den genannten Anlagen wird durch eine Verbindungsvorrichtung gebildet, die als Benutzersteckdose (oder BAT ("Base de Acceso Terminal", Zugangsterminal-Basis)) bezeichnet wird, an die das Endgerät des Benutzers (Fernsehapparat, Video-Einrichtung, Dekodierer, ...) angeschlossen wird.

Zur Zeit befinden sich auf dem Markt eine große Anzahl von Benutzersteckdosen. Die spanische Patentanmeldung P200302709 offenbart eine Benutzersteckdose, die im wesentlichen aus einem Gehäuse besteht, in dem zwei Verbindungselemente angeordnet sind, eine elektronische Schaltung und ein Deckel oder ein Verschluß. Auch sind andere Benutzersteckdosen mit bis zu drei Verbindungselemeneten bekannt.

Dieser Typ von Benutzersteckdosen weist den Nachteil auf, das die Verbindung zu den Einrichtungen des Bentuzers mittels Kabel erfolgt, was die Bewegbarkeit der Benutzereinrichtungen verhindert. Außerdem wird bei einer Vielzahl von Kabeln ein Kabelgewirr erzeugt, das sich nur schwer entflechten läßt.

Ausgehend von diesem Stand der Technik liegt der Erfindung die Aufgabe zugrunde, eine Benutzersteckdose für Telekommunikationsnetze, insbesondere für (satellitengestützte) Gemeinschafts-Antennenanlagen (MATV/SMATV) zu schaffen, welche die Verbindung zu Einrichtungen des Benutzers ohne die Verwendung von Kabeln ermöglicht und die außerdem ermöglicht, die Bandbreite, die für die Übertragung zu den Endeinrichtungen des Benutzers benötigt wird, auszuwählen.

Diese Aufgabe wird mittels einer Steckdose gemäß Anspruch 1 gelöst.

Die Erfindung zeichnet sich durch eine Vielzahl von Vorteilen aus.

Bei einem Ausführungsbeispiel gemäß der Erfindung besteht die Steckdose für Telekommunikationsnetze, insbesondere für (satellitengestützte) Gemeinschafts-Antennenanlagen (MATV/SMATV), aus einem Gehäuse, in dem ein oder mehr als ein Verbindungselement, eine elektronische Schaltung und eine Abdeckung angeordnet sind; diese Steckdose ist dadurch gekennzeichnet, dass sie einen Tuner und Ubretragungsmittel aufweist, die Telekommunikationssignale drahtlos übertragen.
Dies ist mit dem Vorteil verbunden, dass ermöglicht wird, dass die Endgeräteeinrichtungen, die mit Telekommunikationsnetzen verbunden sind, bewegt, also in ihrer räumlichen Anordnung verändert werden können. Zugleich wird der Vorteil erzielt, dass keine Verbindungskabel, die mit Benutzersteckdosen zu verbinden wären, vorzusehen sind und damit eingespart werden.

Bei einem weiteren Ausführungsbeispiel gemäß der Erfindung ist die Steckdose dadurch gekennzeichnet, dass das Telekommunikationssignal aus einem Fernsehkanal besteht, der von dem Tuner ausgewählt worden ist.

Dies ist mit dem Vorteil verbunden, dass die Übertragunsgbandbreite verringert wird, so dass ein geringeres Frequenzspektrum besetzt wird.

Bei einem weiteren Ausführungsbeispiel gemäß der Erfindung ist die Steckdose dadurch gekennzeichnet, dass die Mittel, die das Signal drahtlos bzw. in elektromagnetischer Form übertragen, aus einer Verstärkerschaltung und einer Antenne bestehen.
Dies ist mit dem Vorteil verbunden, dass die Steckdose in einfacher Weise aufgebaut ist und dass zusätzliche Kosten gegenüber einer herkömmlichen Steckdose verringert werden.

Bei einem weiteren Ausführungsbeispiel gemäß der Erfindung ist die Steckdose dadurch gekennzeichnet, dass die Verstärkerschaltung und der Tuner im Inneren des Gehäuses angeordnet sind.
Dies ist mit dem Vorteil einer größeren Integration dieser Ausführungsform der Steckdose verbunden, und mit dem Vorteil einer Ersparnis von Modulen, die die Steckdose bilden.

Bei einem weiteren Ausführungsbeispiel gemäß der Erfindung ist die Steckdose dadurch gekennzeichnet, dass eine externe Speisequelle vorgesehen ist, die mit einem Speisekabel verbindbar ist, und dass das Speisekabel mit der Verstärkerschaltung und dem Tuner verbindbar ist und die Speisequelle mit der Verstärkerschaltung und dem Tuner verbindet.
Dies ist mit dem Vorteil verbunden, dass die Verwendung von Spannungen aus dem Telekommunikationsnetz vermieden wird, und dass zugleich der Entwurf und die Erstellung der Steckdose erleichtert wird.

Bei einem weiteren Ausführungsbeispiel gemäß der Erfindung ist die Steckdose dadurch gekennzeichnet, dass sie eine Fernbedienungseinrichtung aufweist, die in einer Wirkverbindung mit dem Tuner steht und den Fernsehkanal auswählt, der übertragen wird.
Dies ist mit dem Vorteil verbunden, dass die Bedienperson die Kanalauswahl ohne räumliche Einschränkung vornehmen kann, und so beispielsweise in ihrem Sessel vor dem Fernsehgerät bleiben kann.

Bei einem weiteren Ausführungsbeispiel gemäß der Erfindung ist die Steckdose dadurch gekennzeichnet, dass die Antenne durch das Speisekabel der Speisequelle gebildet ist.
Dies ist mit dem Vorteil verbunden, dass eine separate Antenne eingespart wird; indem das Speisekabel als Antenne benutzt wird.

Bei einem weiteren Ausführungsbeispiel gemäß der Erfindung ist die Steckdose dadurch gekennzeichnet, dass die Verstärkerschaltung und der Tuner mit einem Telekommunikationsnetz verbunden sind, das mittels eines Spannungssignals aus dem Netz die Verstärkerschaltung und den Tuner speist.
Dies ist mit dem Vorteil verbunden, dass Speisequellen vermieden werden, womit Kosten und Raum eingespart werden, zudem werden Elemente eingespart, die ansonsten für die Steckdose vorzusehen sind..

Bei einem weiteren Ausführungsbeispiel gemäß der Erfindung ist die Steckdose dadurch gekennzeichnet, dass die Antenne aus einem Kabel gebildet ist, das mit einem der Verbindungselemente verbunden ist.
Dies ist mit dem Vorteil verbunden, dass die Antenene in einfacher Weise erstellt werden kann.

Schließlich ist bei einem weiteren Ausführungsbeispiel gemäß der Erfindung die Steckdose dadurch gekennzeichnet, dass die Antenne durch eine Flachantennne gebildet ist, die mit einem der Verbindungselemente verbunden ist.
Dies ist mit dem Vorteil verbunden, dass höhere Strahlungspegel erzielt werden, so dass der Einsatzbereich der Steckdose vergrößert wird.

Zum weiteren Verständnis der Erfindung wird nun beispielhaft die Steckdose für Telekommunikationsnetze, insbesondere für Gemeinschafts-Antennenanlagen (MATV) bzw. für satellitengestützte Gemeinschafts-Antennenanlagen (SMATV) anhand der Zeichnung beschrieben.

Es zeigt
- Figur 1: ein Schema der Steckdose gemäß der Erfindung;
- Figur 2: ein Blockschaltbild der Steckdose gemäß der Erfindung;
- Figur 3: eine weitere Ausführungsform der Steckdose gemäß der Erfindung; und
- Figur 4: weitere Ausführungsformen der Steckdose gemäß der Erfindung.

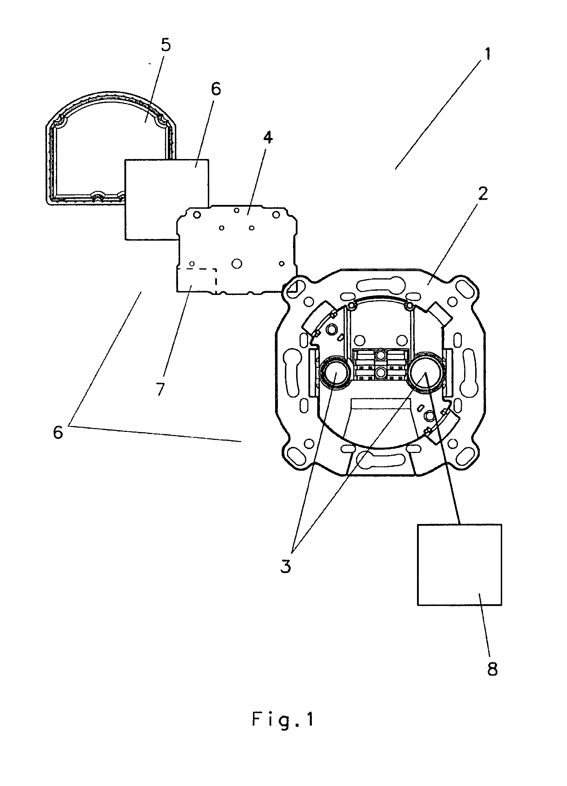

Wie in Figur 1 dargestellt, besteht die Steckdose 1 aus einem Gehäuse 2, in dem Verbindungs(steck-bzw. -steckaufnahme-)elemente 3 angeordnet sind, eine elektronische Schaltung 4, eine Abdeckung (Deckel, Verschluß) 5, einen Tuner (Sintonizator) 6 und Übertragungsmittel 61, die das Signal drahtlos, in radioelektrischer bzw. elektromagnetischer Form übertragen. Diese Mittel 6 können beispielsweise aus einer Verstärkerschaltung 7 und einer Antenne 8 bestehen. Die Komponenten 6, 61, 7 und 8 können in oder an dem Gehäuse 2 bzw. der Steckdose in anderer Weise räumlich zugeordnet sein.

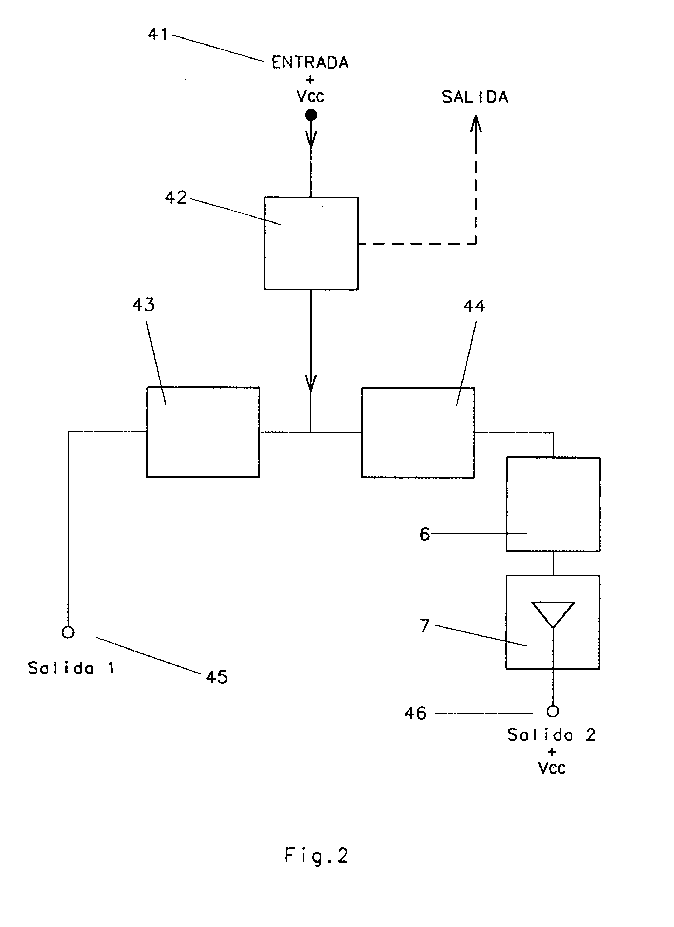

Figur 2 zeigt ein Blockschaltbild der elektronischen Schaltung 4 der Steckdose 1 gemäß der Erfindung. Wie in der Figur dargestellt, verfügt die elektronische Schaltung 4 über einen Signaleingang ("SALIDA") 41, über den das Signal aus einem Telekommunikationsnetz, insbesondere aus einer (z.B. satellitengestützten) Gemeinschafts-Antennenanlage (MATV / SMAT) zugeführt wird. Ein optionales Ableitungselement 42 leitet das Signal, bzw. einen Teil des Eingangssignals 42 in das Innere der Schaltung 4 und das Signal bzw. einen Teil des Signals zurück in das Telekommunikationsnetz, wobei die optionale Ableitungseinrichtung 42 die Funktion einer Durchgangsschleife erfüllt. Zwei Bandpaßfilter 43 und 44, deren Durchlaßbbänder entsprechend der Benutzung der Steckdose angepaßt werden, trennen das Eingangssignal in zwei Bänder, zum Beispiel in ein erstes Band zwischen 470 und 865 MHz und in ein zweites Band zwischen 950 y 2400MHz. Der Ausgang des Filters 43 ist direkt mit dem Ausgang ("salida 1") 45 der elektronischen Schaltung 4 verbunden, die galvanisch mit einem der Verbindungselemente 3 des Gehäuses 2 der Steckdose 1 verbunden ist.

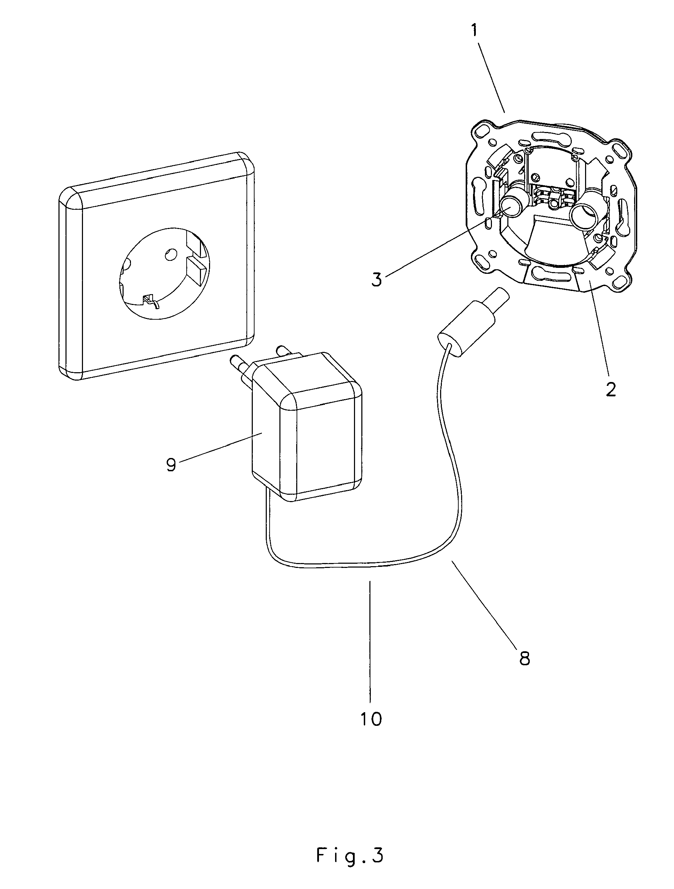

Der Ausgang des Filters 44 ist mit einem Tuner 6 verbunden, der die Bandbreite des zu übertragenden Signals auswählt, beispielsweise geanu einen Fernsehkanal. Der Tuner 6 ist mit einer Verstärkerschaltung 7 verbunden, die das Signal verstärkt und dem Ausgang ("salida 2") 46 der elektronischen Schaltung 4 zuführt. Dieser Ausgang 46 ist galvanisch mit einem der Verbindungselemente 3 des Gehäuses 2 der Steckdose 1 verbunden. Die Verstärkerschaltung 7 kann eine Schaltung zur automatischen Gewinnsteuerung (automatic gain control) aufweisen.
Die elektronische Schaltung 4 kann auch durch ein Spannungssignal Vcc gespeist werden, das aus dem Telekommunikationsnetz über den Eingang 41 zugeführt wird. Eine andere Möglichkeit besteht darin, dass die Schaltung 4 durch eine Spannung Vcc gespeist wird, die von einer externen Spannungsquelle 9 (Figur 3) über den Ausgang 46 zugeführt wird.

Figur 3 zeigt eine Ausführungsform der Steckdose 1 mit einer externen Speisequelle 9, die mit einem elektrischen Versorgungsnetz verbunden ist. Diese Speisequelle 9 ist mit einem Speisekabel 10 ausgestattet, das die Antenne 8 der Benutzersteckdose 1 darstellt und das mit einem der Verbindungselemente 3 des Gehäuses 2 der Benutzersteckdose 1 verbunden ist.

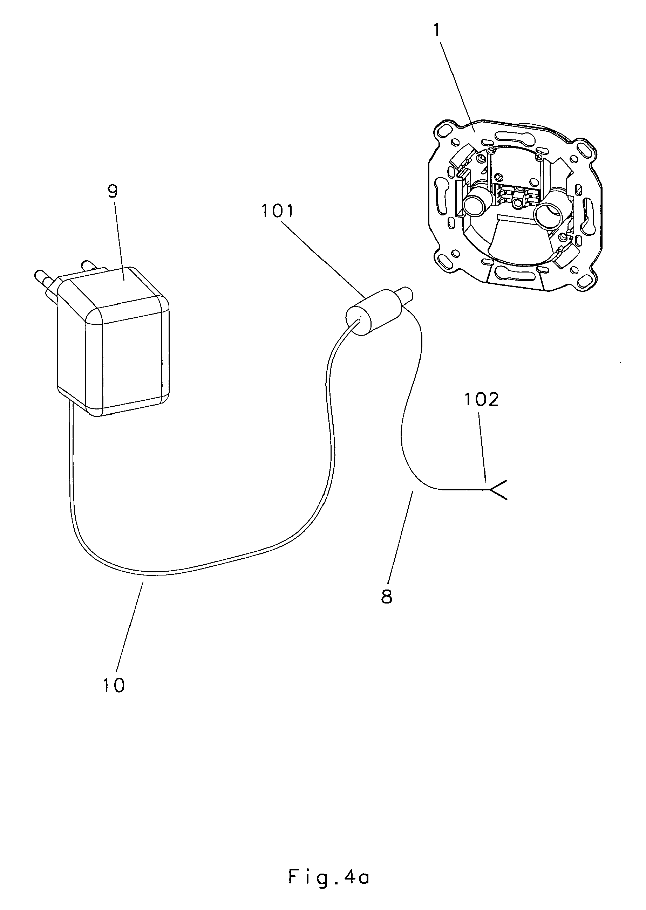

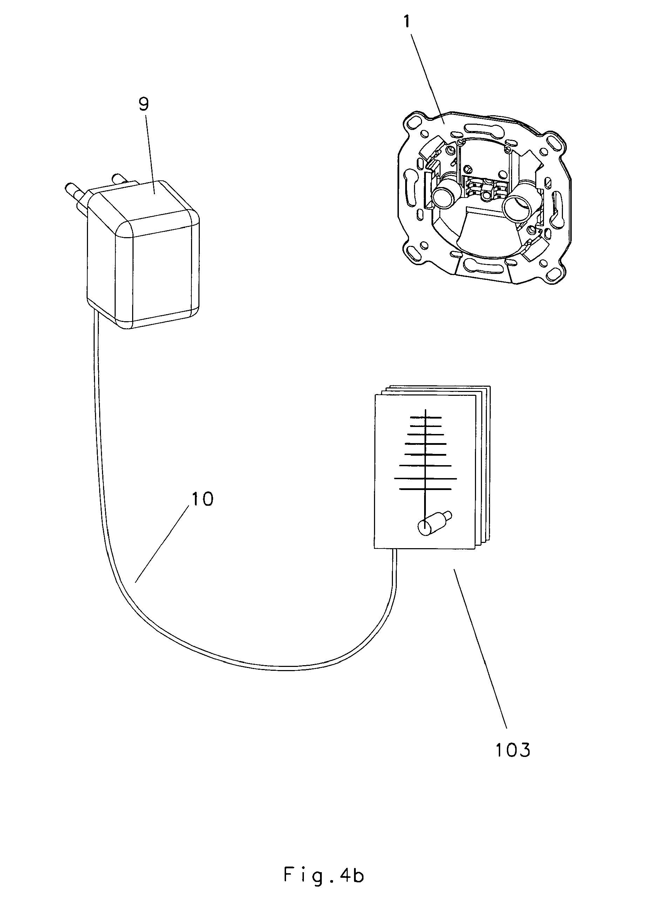

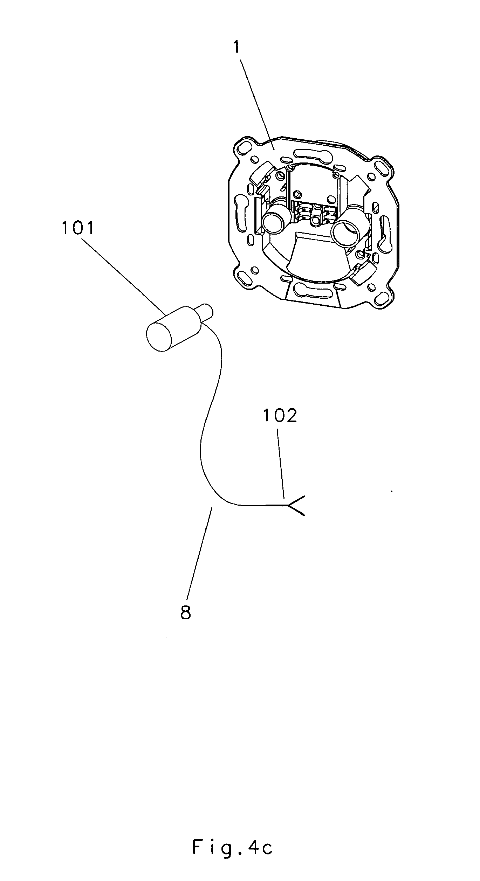

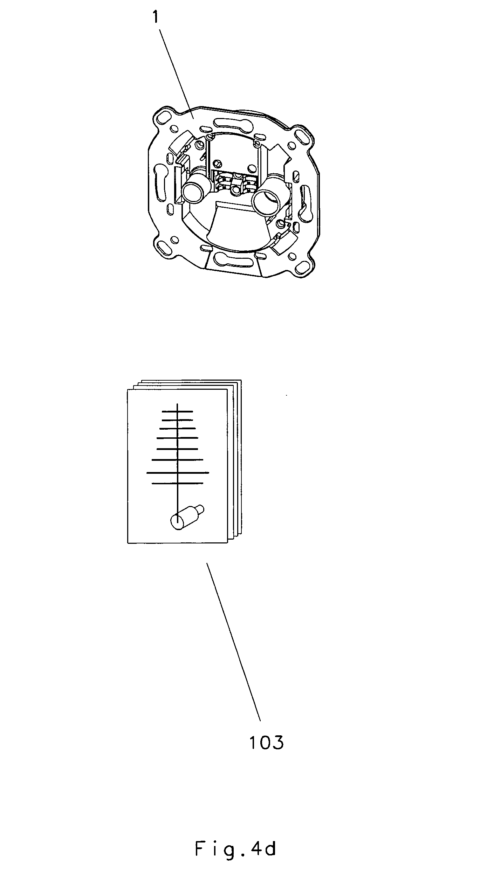

Figur 4 zeigt unterschiedliche Ausführungsformen der Steckdose 1 gemäß der Erfindung. Die Figuren 4a und 4b zeigen eine Ausführungsform, bei der das Kabel 10 der Speisequelle 9 über einen Stecker bzw. Verbinder 101 verfügt, mit dem die Antenne 8 verbunden wird, die durch ein Kabel 102 (fFlgur 4a) oder durch eine Flachantenne 103 (Figur 4b), welche auf eine gedruckte Schaltung gedruckt ist, gebildet ist.

Die Figuren 4c und 4d zeigen weitere Ausführungsformen, bei denen eine externe Antenne 8, die durch ein Kabel 102 oder durch eine Flachantenne 103, welche auf eine gedruckte Schaltung gedruckt ist, gebildet sein kann, direkt mit einem der Verbindungselemente 3 des Gehäuses 2 der Steckdose 1 verbunden ist.

### Bezugszeichen:

1.- Steckdose
2.- Gehäuse
3.- Verbindungselement
4.- Elektronische Schaltung
   41.- Eingang ("ENTRADA")
   42.- Ableitungselement (optional) ("SALIDA" = Ausgang)
   43.- Bandpaß
   44.- Bandpaß
   45.- Ausgang ("SALIDA 1")
   46.- Ausgang ("SALIDA 2")
5.- Abdeckung, Deckel, Verschluß
6.- Tuner, Sintonizator
   61.- Mittel, die das Signal drahtlos, bzw. in radioelektronischer Form übertragen
7.- Verstärkerschaltung
8.- Antenne
9.- Speisequelle
10.- Speisekabel
   101.- Stecker
   102.- Kabel
   103.- Flachantenne

11 Fernbedienung
Vcc Speisespannung

## Patentansprüche

1. Steckdose (1) für Telekommunikationsnetze, insbesondere Gemeinschaftsantennenanlagen, bestehend zumindest aus einem Gehäuse (2) mit mindestens einem Verbindungselement (3), einer elektronischen Schaltung (4) und einer Abdeckung (5),
**dadurch gekennzeichnet, dass** sie einen Tuner (6) und Ubertragungsmittel (61) aufweist, die ein Telekommunikationssignal drahtlos übertragen.

2. Steckdose nach Anspruch 1, **dadurch gekennzeichnet, dass** das Telekommunikationssignal aus einem Fernsehkanal besteht, der von dem Tuner (6) ausgewählt worden ist.

3. Steckdose nach Anspruch 1, **dadurch gekennzeichnet, dass** die Übertragungsmittel (61), die das Telekommunikationssignal drahtlos übertragen, aus einer Verstärkerschaltung (7) und einer Antenne (8) bestehen.

4. Steckdose nach Anspruch 3, **dadurch gekennzeichnet, dass** die Verstärkerschaltung (7) und der Tuner (6) im Inneren des Gehäuses (2) angeordnet sind.

5. Steckdose nach einem der vorstehenden Ansprüche, dass eine externe Speisequelle (9) vorgesehen ist, die mit einem Speisekabel (10) verbindbar ist, und dass das Speisekabel (10) mit der Verstärkerschaltung (7) und dem Tuner (6) verbindbar ist und die Speisequelle (9) mit der Verstärkerschaltung (7) und den Tuner (6) verbindet.

6. Steckdose nach einem der vorstehenden Ansprüche, **dadurch gekennzeichnet, dass** sie eine Fernbedienungseinrichtung (11) aufweist, die in einer Wirkverbindung mit dem Tuner (6) steht und den Fernsehkanal auswählt, der übertragen wird.

7. Steckdose nach einem der Ansprüche 5 oder 6, **dadurch gekennzeichnet, dass** die Antenne (8) durch das Speisekabel (10) der Speisequelle (9) gebildet ist..

8. Steckdose nach einem der Ansprüche 1 bis 3, **dadurch gekennzeichnet, dass** die Verstärkerschaltung (7) und der Tuner (6) mit einem Telekommunikationsnetz verbunden sind, das mittels eines Spannungssignals (Vcc) aus dem Telekommunikationssnetz die Verstärkerschaltung (7) und den Tuner (6) speist.

9. Steckdose nach Anspruch 7, **dadruch gekennzeichnet, dass** die Antenne (8) aus einem Kabel (102) gebildet ist, das mit einem der Verbindungselemente (3) verbunden ist.

10. Steckdose nach einem der Ansprüche 3 bis 9, **dadurch gekennzeichnet, dass** die Antenne (8) durch eine Flachantennne (103) gebildet ist, die mit einem der Verbindungselemente (3) verbunden ist.
